(19)

Europäisches
Patentamt
European
Patent Office
Office européen
des brevets

(11) **EP 4 134 898 A1**

(12) **EUROPEAN PATENT APPLICATION**
published in accordance with Art. 153(4) EPC

(43) Date of publication:
**15.02.2023 Bulletin 2023/07**

(21) Application number: **21783720.2**

(22) Date of filing: **31.03.2021**

(51) International Patent Classification (IPC):
*G06Q 30/06* (2012.01)

(52) Cooperative Patent Classification (CPC):
**G06F 18/00; G06Q 30/06; H04L 65/40**

(86) International application number:
**PCT/CN2021/084266**

(87) International publication number:
**WO 2021/204039 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2020 CN 202010281176**

(71) Applicants:
• **Beijing Wodong Tianjun Information Technology
Co.,
Ltd.
100176 Beijing (CN)**

• **Beijing Jingdong Century Trading Co., Ltd.
Beijing 100176 (CN)**

(72) Inventors:
• **DENG, Xiaolong
Beijing 100176 (CN)**
• **GAO, Wei
Beijing 100176 (CN)**

(74) Representative: **Mewburn Ellis LLP
Aurora Building
Counterslip
Bristol BS1 6BX (GB)**

(54) **METHOD AND APPARATUS FOR PUSHING INFORMATION**

(57) A method and apparatus for pushing information. The method comprises: obtaining behavior information of at least one target user, and extracting target information from the behavior information (S201), wherein the target information comprises object identifiers of objects at which behaviors aim; determining similarity among the objects indicated by the extracted object identifiers, generating an object similarity matrix by using the similarity among the objects, and constructing a graph network by using the object similarity matrix (S202), wherein vertexes in the graph network are used for representing the objects, and edges of the graph network are used for representing the similarity among the objects; clustering, by using a graph community detection algorithm, the objects represented by the vertexes in the graph network to obtain a clustering result (S203); and pushing object information to a user terminal of the at least one target user on the basis of the clustering result (S204). The method improves the accuracy of object information pushing.

200

Obtain behavior information of at least one target user, and extract target information from the behavior information — 201

Ascertain similarities between items indicated by extracted item identifiers, generate an item similarity matrix using the similarities between the items, and construct a graph network using the item similarity matrix — 202

Cluster items represented by vertices in the graph network using a graph community detection algorithm, to obtain a clustering result — 203

Push item information to a user terminal of the at least one target user based on the clustering result — 204

Fig. 2

EP 4 134 898 A1

**Description**

This patent application claims the priority from Chinese Patent Application No. 202010281176.4, filed on April 10, 2020 and entitled "Method and Apparatus for Pushing Information," the entire disclosure of which is hereby incorporated by reference.

TECHNICAL FIELD

Embodiments of the present disclosure relate to the field of computer technology, and particularly to a method and apparatus for pushing information.

BACKGROUND

In the field of e-commerce, intelligent recommendation for commodities is becoming more and more important. A good commodity recommendation algorithm can more reasonably recommend commodities that customers like, and attract the customers to browse corresponding commodities, which increases the rate of adding commodities to the shopping cart, thereby bringing about an increase in revenue for merchants.

A relevant commodity recommendation approach is generally to adopt a rule-based method to perform a commodity recommendation according to a commodity name or commodity category. Alternatively, the commodity recommendation may be performed according to a similarity between text description information or pictures of commodities.

SUMMARY

Embodiments of the present disclosure propose a method and apparatus for pushing information.

In a first aspect, some embodiments of the present disclosure provide a method for pushing information. The method includes: obtaining behavior information of at least one target user, and extracting target information from the behavior information, wherein the target information comprises an item identifier of an item targeted by a behavior; ascertaining similarities between items indicated by extracted item identifiers, generating an item similarity matrix by using the similarities between the items, and constructing a graph network by using the item similarity matrix, wherein a vertex in the graph network is used to represent an item, and an edge in the graph network is used to represent a similarity between items; clustering, by using a graph community detection algorithm, items represented by vertices in the graph network to obtain a clustering result; and pushing item information to a user terminal of the at least one target user based on the clustering result.

In a second aspect, some embodiments of the present disclosure provide an apparatus for pushing information. The apparatus includes: an obtaining unit, configured to obtain behavior information of at least one target user, and extract target information from the behavior information, wherein the target information comprises an item identifier of an item targeted by a behavior; a generating unit, configured to ascertain similarities between items indicated by extracted item identifiers, generate an item similarity matrix by using the similarities between the items, and construct a graph network by using the item similarity matrix, wherein a vertex in the graph network is used to represent an item, and an edge in the graph network is used to represent a similarity between items; a clustering unit, configured to cluster, by using a graph community detection algorithm, items represented by vertices in the graph network to obtain a clustering result; and a pushing unit, configured to push item information to a user terminal of the at least one target user based on the clustering result.

In a third aspect, some embodiments of the present disclosure provide an electronic device. The electronic device includes: one or more processors; and a storage apparatus, configured to store one or more programs, where the one or more programs, when executed by the one or more processors, cause the one or more processors to implement the method according to any one of the implementations described in the first aspect.

In a fourth aspect, some embodiments of the present disclosure provide a computer readable medium, storing a computer program, wherein the program, when executed by a processor, implements the method according to any one of implementations described in the first aspect.

According to the method and apparatus for pushing information provided in the above embodiments of the present disclosure, the behavior information of the at least one target user is acquired, and the target information comprising the item identifier of the item targeted by the behavior is extracted from the above behavior information; then, the similarity between the items indicated by the extracted item identifiers is ascertained, the item similarity matrix is generated using the above similarity between the items, and the graph network is constructed using the above item similarity matrix; next, the items represented by the vertices in the above graph network are clustered using the graph community detection algorithm, to obtain the clustering result; and finally, based on the above clustering result, the item information is pushed to the user terminal of the above at least one target user. In this way, the useful information can be extracted from the behavior information of the user to construct the item similarity matrix, the items targeted by the behaviors of the user can be clustered using the graph community detection algorithm, and the item recommendation can be performed based on the obtained clustering result. Thus, the accuracy of pushing the item information can be improved.

BRIEF DESCRIPTION OF THE DRAWINGS

After reading detailed descriptions of non-limiting embodiments given with reference to the following accompanying drawings, other features, objectives and advantages of the present disclosure will be more apparent:

Fig. 1 is a diagram of an example system architecture in which embodiments of the present disclosure may be applied;

Fig. 2 is a flowchart of a method for pushing information according to an embodiment of the present disclosure;

Fig. 3 is a flowchart of ascertaining a similarity between items in the method for pushing information according to an embodiment of the present disclosure;

Fig. 4 is a flowchart of clustering items represented by vertices in a graph network in the method for pushing information according to an embodiment of the present disclosure;

Fig. 5 is a schematic structural diagram of an apparatus for pushing information according to an embodiment of the present disclosure; and

Fig. 6 is a schematic structural diagram of a computer system of an electronic device adapted to implement embodiments of the present disclosure.

DETAILED DESCRIPTION OF EMBODIMENTS

Embodiments of the present disclosure is further described below in detail by combining the accompanying drawings. It may be appreciated that the detailed embodiments described herein are merely used for explaining the relevant disclosure, rather than limiting the disclosure. In addition, it should also be noted that, for the ease of description, only the parts related to the relevant disclosure are shown in the accompanying drawings.

It should be noted that embodiments in the present disclosure and the features in the embodiments may be combined with each other on a non-conflict basis. Embodiments of the present disclosure will be described below in detail with reference to the accompanying drawings.

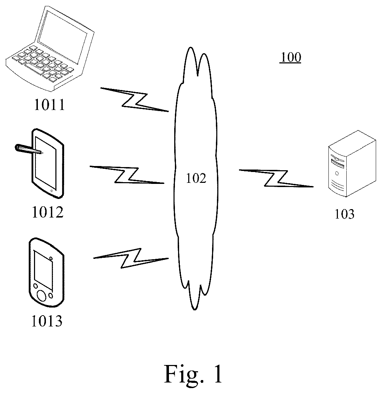

Fig. 1 illustrates an example system architecture 100 in which a method for pushing information according to an embodiment of the present disclosure may be applied.

As shown in Fig. 1, the system architecture 100 may include user terminal(s) 1011, 1012, 1013, a network 102, and a server 103. The network 102 serves as a medium providing a communication link between the user terminal(s) 1011, 1012, 1013 and the server 103. The network 102 may include various types of connections, for example, wired or wireless communication links, or optical fiber cables.

A user may use the user terminal(s) 1011, 1012, 1013 to interact with the server 103 via the network 102 to receive or send a message (e.g., the user terminal(s) 1011, 1012, 1013 may receive the item information sent by the server 103, and the server 103 may also acquire the behavior information of the user from the user terminal(s) 1011, 1012, 1013), etc. Various communication client applications (e.g., a shopping application, a search application, and instant communication software) may be installed on the user terminal(s) 1011, 1012, 1013.

The user terminal(s) 1011, 1012, 1013 may be hardware or software. When being the hardware, the user terminal(s) 1011, 1012, 1013 may be various electronic devices supporting information interaction, the electronic devices including, but not limited to, a smartphone, a tablet computer, a laptop portable computer, a desktop computer, etc. When being the software, the user terminal(s) 1011, 1012, 1013 may be installed in the above listed electronic devices. The user terminals may be implemented as a plurality of pieces of software or a plurality of software modules, or as a single piece of software or a single software module, which will not be specifically defined here.

The server 103 may be a server providing various services. For example, the server 103 may be a backend server analyzing the behavior information of the user. The server 103 may first acquire behavior information of at least one target user, and extract, from the above behavior information, target information comprising an item identifier of an item targeted by a behavior. Then, the server 103 may ascertain similarities between items indicated by extracted item identifiers, generate an item similarity matrix by using the above similarities between the items, and construct a graph network by using the above item similarity matrix. Next, the server 103 may cluster items represented by vertices in the above graph network by using a graph community detection algorithm to obtain a clustering result. Finally, the server 103 may push item information to the user terminal(s) 1011, 1012, 1013 of the above at least one target user based on the above clustering result.

It should be noted that the server 103 may be hardware or software. When being the hardware, the server 103 may be implemented as a distributed server cluster composed of a plurality of servers, or as a single server. When being the software, the server 103 may be implemented as a plurality of pieces of software or a plurality of software modules (e.g., software or software modules for providing a distributed service), or as a single piece of software or a single software module, which will not be specifically defined here.

It should be noted that the method for pushing information provided by embodiments of the present disclosure is generally performed by the server 103.

It should be noted that the server 103 may locally store the behavior information of the user, and the server 103 may locally acquire the behavior information of the user. At this time, the example system architecture 100 may not be provided with the terminal device(s) 1011, 1012, 1013 and the network 102.

It should be appreciated that the numbers of the terminal devices, the networks and the servers in Fig. 1 are merely illustrative. Any number of terminal devices, networks and servers may be provided based on actual requirements.

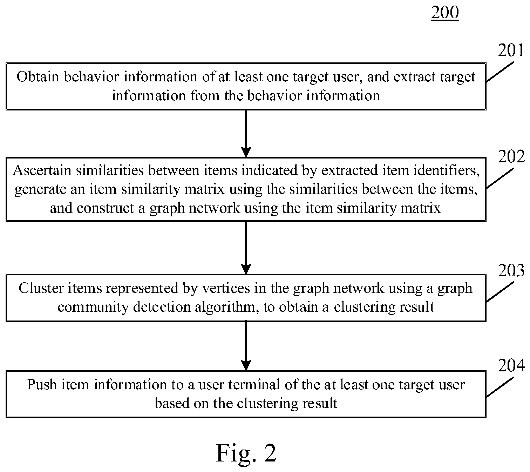

Further referring to Fig. 2, Fig. 2 illustrates a flow 200 of a method for pushing information according to an embodiment of the present disclosure. The method for pushing information includes the following steps.

Step 201, obtaining behavior information of at least one target user, and extracting target information from the behavior information.

In this embodiment, an executing body (e.g., the server shown in Fig. 1) of the method for pushing information may obtain the behavior information of the at least one target user, and extract target information from the above behavior information. The above target user may be a user to whom information is to be recommended. The behavior of the target user may include, but not limited to, at least one of: browsing, clicking, searching, favoriting the item information of an item, and adding the item information of the item to a shopping cart. The above behavior information may include, but not limited to, at least one of: a user identifier of a target user from which a behavior originates, a behavior time, or an object targeted by the behavior.

Here, the above target information may include an item identifier of an item targeted by the behavior. The above item identifier may be an SKU (stock keeping unit) of the item, and the stock keeping unit may also be referred to as a stock level unit, and is a unique identifier for each product and service. The SKU may be used for data management, for example, a stock situation of a product in a warehouse or a retail store. The above target information may further include the user identifier of the target user from which the behavior originates.

It should be noted that, after the target information is extracted, the target information corresponding to the same user identifier may be divided into one group according to the user identifier.

Step 202, ascertaining similarities between items indicated by extracted item identifiers, generating an item similarity matrix by using the similarities between the items, and constructing a graph network by using the item similarity matrix.

In this embodiment, the above executing body may ascertain the similarities between the items indicated by the extracted item identifiers. As an example, the above executing body may first acquire an item description text of an item indicated by each item identifier in the above item identifiers; and then, may ascertain, for every two items in the items indicated by the above item identifiers, a similarity between the item description texts of the two items as a similarity between the two items.

As another example, the above executing body may first acquire an item description picture of the item indicated by the each item identifier in the above item identifiers; and then, may input, for every two items in the items indicated by the above item identifiers, the item description pictures of the two items into a pre-trained image similarity prediction model, to obtain a similarity between the item description pictures of the two items as a similarity between the two items.

Then, the above executing body may generate the item similarity matrix by using the above similarities between the items. A similar matrix generally refers to a matrix having a similarity relationship. It is supposed that both A and B are n-th order matrices. If there is an invertible matrix P and $P^{-1}AP = B$, then B is said to be a similar matrix of A, and the matrices A and B are said to be similar, denoted as A~B. As an example, if the similarity between an item A and an item B is 0.5, the similarity between the item A and an item C is 0.12, the similarity between the item A and an item D is 0.68, the similarity between the item B and the item C is 0.25, the similarity between the item B and the item D is 0.87, and the similarity between the item C and the item D is 0.9, the generated item similarity matrix P may be represented as follows:

$$P = \begin{bmatrix} 0 & 0.5 & 0.12 & 0.68 \\ 0.5 & 0 & 0.25 & 0.87 \\ 0.12 & 0.25 & 0 & 0.9 \\ 0.68 & 0.87 & 0.9 & 0 \end{bmatrix}.$$

Then, the above executing body may construct a graph network (GN) by using the above item similarity matrix. A graph network generally is composed of interconnected graph network blocks (GN blocks), which are also referred to as "nodes" in implementations of a neural network. The connection between the nodes is referred to as an "edge," representing the dependency between the nodes. Here, a vertex in the above graph network may be used to represent an item, and an edge in the above graph network may be used to represent a similarity between items.

It should be noted that a preset similarity threshold may be set. If the similarity between the two items is smaller than the above similarity threshold, the similarity between the two items may be set to 0. Then, there is no edge connecting the nodes representing the two items in the above graph network.

Step 203, clustering, by using a graph community detection algorithm, items represented by vertices in the graph network to obtain a clustering result.

In this embodiment, the above executing body may cluster the items represented by the vertices in the graph network by using the graph community detection algorithm, to obtain the clustering result. A graph community is generally defined as a subset of vertices. The vertices in each subset are connected more closely relative to the other vertices of the network. The graph community detection algorithm is an algorithm that divides, according to a degree of closeness of objects represented by vertices in a graph structure, the vertices into at least two subsets. Here, each subset obtained by the dividing may be a cluster.

Here, the above executing body may cluster the items represented by the vertices in the above graph network according to the following formula (1):

$$M = \frac{1}{2L}\sum_{i,j=1}^{N} \left( A_{i,j} - \frac{k_i k_j}{2L} \right) \delta\left(c_i, c_j\right) \ (1).$$

Here, $M$ is modularity, which is a criterion used to measure the quality of the division for a graph community, and the better the division quality is, the larger the value of $M$ is; $L$ is the number of edges contained in the above graph network; the values of $i$ and $j$ range from 1 to $N$, the value of $N$ is greater than or equal to 1, and $N$ is the number of vertices contained in the above graph network; and $A_{i,j}$ is a value corresponding to an $i$-th vertex and a $j$-th vertex in an adjacency matrix. Here, a numerical value in the adjacency matrix is ascertained based on the numerical value at a corresponding position in the item similarity matrix and a preset similarity threshold. If the similarity between the item represented by the $i$-th vertex and the item represented by the $j$-th vertex is greater than the above similarity threshold, the corresponding numerical value in the adjacency matrix is 1; If the similarity between the item represented by the $i$-th vertex and the item represented by the $j$-th vertex is less than or equal to the above similarity threshold, the corresponding numerical value in the adjacency matrix is 0. Moreover, $k_i$ represents a degree of the vertex $i$ (here, the degree of the vertex represents the number of other vertices connected to the vertex); $k_j$ represents a degree of the vertex $j$ ; $c_i$ represents a cluster of the $i$-th vertex; $c_j$ represents a cluster of the $j$-th vertex; $\delta(c_i, c_j)$ is a Kronecker-delta function, $\delta(c_i, c_j)$ is 1 if the $i$-th vertex and the $j$-th vertex belong to the same cluster, and $\delta(c_i, c_j)$ is 0 if the $i$-th vertex and the $j$-th vertex do not belong to the same cluster.

It should be noted that since $k_i$ and $k_j$ respectively represent the degree of the $i$-th vertex and the degree of the $j$-th vertex, $\frac{k_i k_j}{2L}$ represents an expected number of edges between the $i$-th vertex and the $j$-th vertex when the graph network is randomly assigned. When both $k_i$ and $k_j$ are large, the probability that an edge connecting the $i$-th vertex and the $j$-th vertex occurs becomes larger. When at least one of $k_i$ and $k_j$ is small, the probability that an edge connecting the $i$-th vertex and the $j$-th vertex occurs becomes smaller.

It should also be noted that $A_{i,j} - \frac{k_i k_j}{2L}$ represents a difference between the actual structure of the graph network and the expected structure when the graph network is randomly combined. When $A_{i,j}$=1 and $\frac{k_i k_j}{2L}$ is very small, the numerical value of $M$ is highest. This means that when there exists a connection between the $i$-th vertex and the $j$-th vertex but the expectation that there exists a connection between the $i$-th vertex and the $j$-th vertex is little, the obtained value is higher. Further, if the above two vertices are divided into one cluster, the modularity of the graph network can be improved. If the above two vertices are divided into different clusters, the modularity of the graph network cannot be improved.

Step 204, pushing item information to a user terminal of the at least one target user based on the clustering result.

In this embodiment, the above executing body may push the item information to the user terminal of the at least one target user based on the clustering result obtained in step 203. For each target user in the at least one target user, the above executing body may push the item information of another item in the same cluster (target cluster) as the item targeted by the behavior of the target user to the user terminal of the target user. The above item information may include, but not limited to, at least one of: an item information link, an item description text, an item description picture, and/or an item description video.

Here, the above executing body may select a preset first number (e.g., 3) of items from the target cluster as to-be-recommended items. The above executing body may alternatively select a to-be-recommended item from the above target cluster based on a number of being browsed or clicked of each item contained in the above target cluster. For example, the items contained in the above target cluster may be sorted according to the descending order of numbers of being browsed or clicked, and then a preset second number of top-ranked items in the sorting result may be selected as to-be-recommended items. Alternatively, an item of which the number of being browsed or clicked is greater than a preset number threshold may be selected from the above target cluster as a to-be-recommended item. The above executing body may alternatively select, from the above target cluster, a preset third number of items targeted by the behaviors of the target user and having a high similarity as to-be-recommended items. The above executing body may alternatively select an item with a high relevance to the current season from the above target cluster as a to-be-recommended item. For example, if the target cluster includes a mask, a scarf, a wind coat and flip-flops, and the current season is summer, the flip-flops may be used as a to-be-recommended item.

In some alternative implementations of this embodiment, the above target information may further include a behavior time of a behavior generated on an item. Here, one behavior time generally corresponds to one item identifier. The above executing body may ascertain the similarities between the items indicated by the extracted item identifiers through the following approach. For each target user in the at least one target user, the above executing body may sort, according to the sequential order of the behavior times of the target user, corresponding item identifiers to obtain an item identifier sequence. Then, the above executing body may ascertain a similarity between the items indicated by adjacent item identifiers in the above item identifier sequence as a first similarity. Particularly, for each group of items in groups of items, the above executing body may ascertain a time difference between behavior times of behaviors generated for the group of items. Then, the above executing body may round down the ratio of the absolute value of the time difference to a preset second numerical value to obtain an integer, and then input the obtained integer into a preset Gaussian kernel function to obtain a similarity between the groups of items as the first similarity. Then, the above executing body may sum first similarities between repeated two items to obtain the similarity between the two items. The Gaussian kernel function may also be referred to as a radial basis function (RBF), which is a commonly used kernel function. The Gaussian kernel function may map finite-dimensional data to a high dimensional space. The Gaussian kernel function may is a monotone function of the Euclidean distance between two vectors.

In some alternative implementations of this embodiment, through the following approach, the above executing body may cluster the items represented by the vertices in the above graph network by using the graph community detection algorithm, to obtain the clustering result. The above executing body may cluster the items represented by the vertices in the above graph network based on the graph community detection algorithm and the similarities between the above items, to obtain the clustering result. Particularly, the above executing body may cluster the items represented by the vertices in the above graph network according to the following formula (2):

$$M = \frac{1}{2L} \sum_{i,j=1}^{N} \left( A_{i,j} - \frac{k_i k_j}{2L} \right) \delta\left(c_i, c_j\right) C(i, j) \ (2).$$

Here, M is modularity, which is a criterion used to measure the quality of the division for a graph community, and the better the division quality is, the larger the value of *M* is; *L* is the number of edges contained in the above graph network; the values of *i* and *j* range from 1 to *N*, the value of *N* is greater than or equal to 1, and *N* is the number of vertices contained in the above graph network; and $A_{i,j}$ is a value corresponding to an *i*-th vertex and a *j*-th vertex in an adjacency matrix. Here, a numerical value in the adjacency matrix is ascertained based on the numerical value at a corresponding position in the item similarity matrix and a preset similarity threshold. If the similarity between the item represented by the *i*-th vertex and the item represented by the *j*-th vertex is greater than the above similarity threshold, the corresponding numerical value in the adjacency matrix is 1; If the similarity between the item represented by the *i*-th vertex and the item represented by the *j*-th vertex is less than or equal to the above similarity threshold, the corresponding numerical value in the adjacency matrix is 0. Moreover, $k_i$ represents a degree of the vertex *i* (here, the degree of the vertex represents the number of other vertices connected to the vertex); $k_j$ represents a degree of the vertex $j$ ; $c_i$ represents a cluster of the $i$ -th vertex; $c_j$ represents a cluster of the $j$ -th vertex; $\delta(c_i, c_j)$ is a Kronecker-delta function, $\delta(c_i, c_j)$ is 1 if the $i$ -th vertex and the $j$ -th vertex belong to the same cluster, and $\delta(c_i, c_j)$ is 0 if the $i$ -th vertex and the $j$ -th vertex do not belong to the same cluster. Moreover, C(i,j) is ascertained by the similarity $W(i,j)$ between the item represented by the $i$ -th vertex and the item represented by the $j$ -th vertex and the preset similarity threshold. If $W(i,j)$ is greater than the above similarity threshold, C(i,j)=1. If $W(i,j)$ is less than or equal to the above similarity threshold, C(i,j)=O.

According to the method provided in the above embodiment of the present disclosure, the useful information is extracted from the behavior information of the user to construct the item similarity matrix, the items targeted by the behaviors of the user are clustered by using the graph community detection algorithm, and the item recommendation can be performed based on the obtained clustering result. Thus, the accuracy of pushing the item information can be improved.

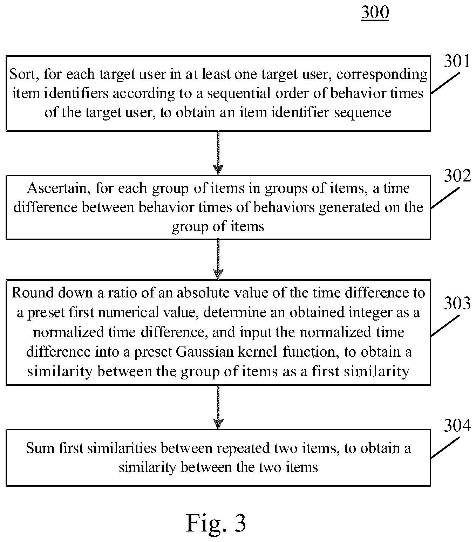

Further referring to Fig. 3, Fig. 3 illustrates a flow 300 of ascertaining a similarity between items in the method for pushing information according to an embodiment of the present disclosure, the flow 300 including the following steps:

Step 301, for each target user in at least one target user, sorting corresponding item identifiers according to a sequential order of behavior times of the target user, to obtain an item identifier sequence.

In this embodiment, for the each target user in the at least one target user, an executing body (e.g., the server shown in Fig. 1) of the method for pushing information may sort the corresponding item identifiers according to the sequential order of the behavior times of the target user, to obtain the item identifier sequence. Here, one behavior time generally corresponds to one item identifier. As an example, if user A clicks on the item information of an item C at 8:56:21, browses the item information of an item E at 8:56:57, adds the item information of an item F to a shopping cart at 9:01:08, and clicks on the item information of the item C at 9:05:12, the item identifier sequence can be obtained according to the behavior times of the user A: item C-item E-item F-item C.

Step 302, for each group of items in groups of items, ascertaining a time difference between behavior times of behaviors generated for the group of items.

In this embodiment, a sliding time window may be used to slide the obtained item identifier sequence. Here, the time difference in the sliding window is variable, but only two item identifiers are generally allowed to be contained in a sliding window at a time. The two items indicated by the two item identifiers contained in the sliding window constitute one group of items. For each group of items in groups of items, the above executing body may ascertain the time difference between the behavior times of the behaviors generated on the group of items. As an example, if a group of items refers to an item C and an item E, the behavior time of the behavior generated on the item C is 8:56:21, and the behavior time of the behavior generated on the item E is 8:56:57, the time difference between the behavior times of the behaviors generated on the group of items is 36 seconds.

Step 303, rounding down a ratio of an absolute value of the time difference to a preset first numerical value to obtain an integer, ascertaining the obtained integer as a normalized time difference, and inputting the normalized time difference into a preset Gaussian kernel function, to obtain a similarity between the group of items as a first similarity.

In this embodiment, the above executing body may round down the ratio of the absolute value of the time difference ascertained in step 302 to the preset first numerical value to obtain an integer, and ascertain the obtained integer as the normalized time difference. Here, the preset first numerical value may be obtained through a statistical analysis.

Here, the above executing body may ascertain the normalized time difference according to the following formula (3):

$$\tau = \left\lfloor \frac{|t_j - t_i|}{\tau_0} \right\rfloor (3).$$

Here, $\tau$ is a normalized time difference; $t_j$ is the behavior time of a behavior generated on a j-th item; $t_i$ is the behavior time of a behavior generated on an i-th item; $\tau_0$ is a constant, which represents a normalization factor for $|t_j - t_i|$ and of which the value may be obtained through a statistical analysis according to an actual situation. Here, $\tau_0$ may be 15, indicating that 15 minutes are taken as a time reference. For example, when the time difference between the two items targeted by the behaviors of the user is within 15 minutes, the normalized time difference obtained from the formula (3) is 0. When the time difference between the two items targeted by the behaviors of the user is greater than 15 minutes but less than 30 minutes, the normalized time difference obtained from the formula (3) is 1.

Then, the above executing body may input the above normalized time difference into the preset Gaussian kernel function, to obtain the similarity between the group of items as the first similarity.

Here, the above executing body may ascertain the similarity between one group of items according to the following formula (4):

$$sim^{(k,d)}\left(sku_{t_i}^m, sku_{t_j}^n\right) = exp\left(-\frac{\tau^2}{2\sigma^2}\right)(4).$$

Here, $sim^{(k,d)}$ ( $sku_{t_i}^m, sku_{t_j}^n$ ) represents a similarity between an item m targeted by a behavior generated at a moment $t_i$ by a k-th user in a certain day (represented by d here) and an item $n$ targeted by a behavior generated at a moment $t_j$ by the k-th user in the certain day. Here, $t_i$ and $t_j$ are respectively two different time points (a minute may be used as a basic time unit here) at which the same user (the k-th user here) generates behaviors on different commodities in the same day (day d here), and $\tau$ represents the normalized time difference between $t_i$ and $t_j$. As $\tau$ increases, the values of the Gaussian kernel function decreases monotonically. Here, $\sigma$ refers to a bandwidth in the Gaussian kernel function, which is used to control a radial range of effect. The larger $\sigma$ is, the larger the local influence range of the Gaussian kernel function is.

Step 304, summing first similarities between repeated two items to obtain a similarity between the two items.

In this embodiment, the above executing body may query repeated two items from the groups of items, and sum the first similarities between the repeated two items to obtain the similarity between the two items. As an example, if the obtained item identifier sequence is: item C-item E-item F-item C-item E, the above executing body may ascertain the first similarity between the item C and the item E, the first similarity between the item E and the item F, the first similarity between the item F and the item C, and the first similarity between the item C and the item E. Then, the above executing body may add the two first similarities between the item C and the item E together, to obtain the similarity between the item C and the item E.

Here, the above executing body may ascertain the similarity between the items according to the following formula (5):

$$sim^{(k,d)}(sku^m, sku^n) = \sum_{t_i,t_j>0, t_i \neq t_j}^{t_i,t_j<T} sim^{(k,d)}\left(sku_{t_i}^m, sku_{t_j}^n\right)(5).$$

Here, $sim^{(k,d)}(sku^m, sku^n)$ represents a similarity (accumulated similarity) between an item $m$ targeted by behavior(s) generated by a k-th user in a certain day (represented by $d$ here) and an item n targeted by behavior(s) generated by the k-th user in the certain day. Here, $t_i$ and $t_j$ are respectively two different time points (a minute may be used as a basic time unit here) at which the same user (the k-th user here) generates behaviors on different commodities in the same day (day $d$ here), and $T$ represents a maximum time point. For example, if $d$ is January 2, $T$ may be 0:00 on January 3. Here, $sim^{(k,d)}$ ( $sku_{t_i}^m, sku_{t_j}^n$ ) represents a similarity between the item $m$ targeted by a behavior generated at a moment $t_i$ by the k-th user in the certain day (represented by $d$ here) and the item $n$ targeted by a behavior generated at a moment $t_j$ by the k-th user in the certain day.

In this embodiment, after ascertaining the similarities between the items targeted by the behaviors generated by a certain user in a curtain day, the above executing body may ascertain the similarities between the items targeted by the behaviors generated by at least one target user (all target users). The above executing body may ascertain the similarity between the items according to the following formula (6):

$$sim^{(d)}(sku^m, sku^n) = \sum_k sim^{(k,d)}(sku^m, sku^n)(6).$$

Here, $sim^{(d)}(sku^m, sku^n)$ represents a similarity (accumulated similarity) between an item m targeted by behaviors generated by all users in a certain day (represented by $d$ here) and an item n targeted by behaviors generated by all the users in the certain day. Here, $sim^{(k,d)}(sku^m, sku^n)$ represents a similarity (accumulated similarity) between the item $m$ targeted by a behavior generated by a k-th user in the certain day (represented by $d$ here) and the item n targeted by a behavior generated by the k-th user in the certain day.

In this embodiment, after ascertaining the similarities between the items targeted by the behaviors generated by the at least one target user (all the target users), the above executing body may ascertain the similarities between the items targeted by the behaviors generated by all the users in a preset time period (which may be from the first day to the $d$-th day here). The above executing body may ascertain the similarity between the items according to the following formula (7):

$$sim(sku^m, sku^n) = \sum_{d'=1}^{d} sim^{(d')}(sku^m, sku^n)$$

$$= \sum_k \sum_{d'=1}^{d} \sum_{t_i,t_j>0,t_i \neq t_j}^{t_i,t_j<T} sim^{(k,d')}\left(sku_{t_i}^m, sku_{t_j}^n\right) \quad (7).$$

Here, $sim(sku^m, sku^n)$ represents a global similarity, indicating an accumulated similarity between an item $m$ targeted by behaviors generated by all users from a first day to a $d$-th day and an item $n$ targeted by behaviors generated by all the users from the first day to the $d$-th day. Here, $sim^{(d')}(sku^m, sku^n)$ represents an accumulated similarity between the item $m$ targeted by behaviors generated by all the users in a $d'$-th day and the item n targeted by behaviors generated by all the users in the $d'$-th day. The value of $d'$ ranges from 1 to d. Here, $sim^{(k,d')}(\,sku_{t_i}^m, sku_{t_j}^n\,)$ represents a similarity between the item $m$ targeted by a behavior generated at a moment $t_i$ by a k-th user in the $d'$-th day and the item $n$ targeted by a behavior generated at a moment $t_j$ by the k-th user in the $d'$-th day.

According to the method provided in the above embodiment of the present disclosure, the similarity between the items is ascertained by using the behavior times of the behaviors generated on the item information. This approach of ascertaining the similarity takes the connection between the shopping habit of a user and a commodity into consideration, thereby improving the pertinence of the pushed item information.

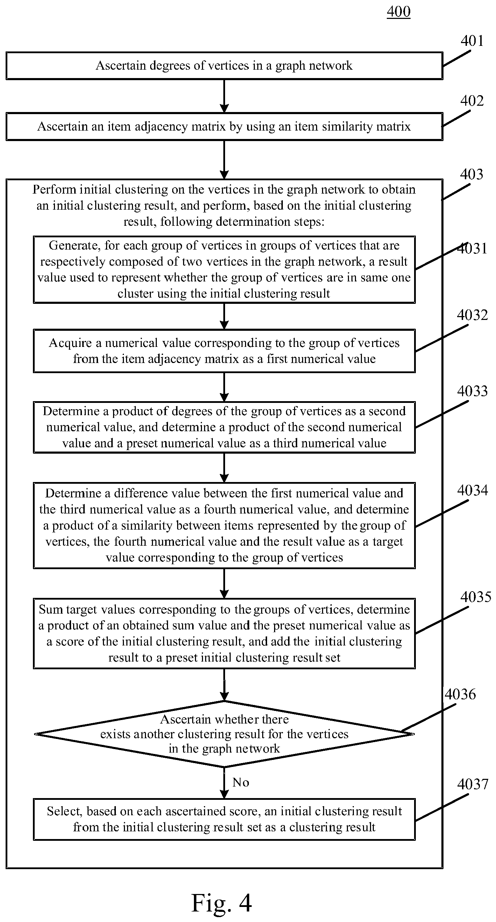

Further referring to Fig. 4, Fig. 4 illustrates a flow 400 of clustering items represented by vertices in a graph network in the method for pushing information according to an embodiment of the present disclosure, the flow 400 including the following steps:

Step 401, ascertaining degrees of vertices in a graph network.

In this embodiment, an executing body (e.g., the server shown in Fig. 1) of the method for pushing information may ascertain the degrees of the vertices in the graph network. Here, a degree of a vertex generally represents the number of other vertices connected to the vertex.

Step 402, ascertaining an item adjacency matrix by using an item similarity matrix.

In this embodiment, the above executing body may ascertain the item adjacency matrix by using the item similarity matrix. A numerical value in the item adjacency matrix is generally ascertained based on a numerical value at a corresponding position in the above item similarity matrix and a preset similarity threshold. Particularly, if a certain numerical value in the above item similarity matrix is less than the above similarity threshold, the numerical value at the position corresponding to this numerical value in the above item adjacency matrix may be set to 0.

As an example, if the preset similarity threshold is 0.4 and the item similarity matrix is $P=\begin{bmatrix} 0 & 0.8 & 0.25 \\ 0.8 & 0 & 0.6 \\ 0.25 & 0.6 & 0 \end{bmatrix}$, then the corresponding item adjacency matrix may be $Q=\begin{bmatrix} 0 & 0.8 & 0 \\ 0.8 & 0 & 0.6 \\ 0 & 0.6 & 0 \end{bmatrix}$.

Step 403, performing initial clustering on the vertices in the graph network to obtain an initial clustering result, and performing, based on the initial clustering result, following determination steps: for each group of vertices in groups of vertices that are respectively composed of two vertices in the graph network, generating a result value used to represent whether the group of vertices are in the same one cluster by using the initial clustering result; acquiring, from the item adjacency matrix, a numerical value corresponding to the group of vertices as a first numerical value; determining a product of degrees of the group of vertices as a second numerical value, and determining a product of the second numerical value and a preset numerical value as a third numerical value; determining a difference value between the first numerical value and the third numerical value as a fourth numerical value, and determining a product of a similarity between items represented by the group of vertices, the fourth numerical value, and the result value as a target value corresponding to the group of vertices; summing target values corresponding to the groups of vertices to obtain a sum value, determining a product of the sum value and the preset numerical value as a score of the initial clustering result, and adding the initial clustering result to a preset initial clustering result set; ascertaining whether there exists another clustering result for the vertices in the graph network; and selecting, based on each ascertained score, an initial clustering result from the initial clustering result set as a clustering result, if there exists no other clustering result.

In this embodiment, the above executing body may perform the initial clustering on the vertices in the above graph network to obtain the initial clustering result, and perform, based on the above initial clustering result, the following determination step. Here, the above executing body may perform arbitrary clustering on the vertices in the above graph network. For example, each vertex in the above graph network may individually constitute one cluster. Alternatively, any two of the vertices in the above graph network may constitute one cluster.

In this embodiment, step 403 may include sub-steps 4031, 4032, 4033, 4034, 4035, 4036 and 4037.

Step 4031, for the each group of vertices in the groups of vertices that are respectively composed of two vertices in the graph network, generating a result value used to represent whether the group of vertices are in a same cluster by using the initial clustering result.

Here, for each group of vertices in the groups of vertices that are respectively composed of two vertices in the above graph network, the above executing body may generate the result value used to represent whether the group of vertices are in same one cluster by using the initial clustering result. If it is found from the above initial clustering result that the group of vertices are in same one cluster, the result value used to represent that the group of vertices are in same one cluster may be generated to be 1. If it is found from the above initial clustering result that the group of vertices are not in same one cluster, the result value used to represent that the group of vertices are in same one cluster may be generated to be 0. Here, whether the group of vertices belong to the same cluster is ascertained using a Kronecker-delta function.

Step 4032, acquiring, from the item adjacency matrix, a numerical value corresponding to the group of vertices as a first numerical value.

Here, the above executing body may acquire a numerical value corresponding to the group of vertices from the item adjacency matrix as a first numerical value. The above executing body may find the numerical value corresponding to the group of vertices from the above item adjacency matrix, and use the found numerical value as the first

$$Q = \begin{bmatrix} 0 & 0.8 & 0 \\ 0.8 & 0 & 0.6 \\ 0 & 0.6 & 0 \end{bmatrix}$$

numerical value. As an example, in the item adjacency matrix, the above executing body may acquire the numerical value 0.8 corresponding to the group of items (the item A and the item B).

Step 4033, determining the product of the degrees of the group of vertices as a second numerical value, and determining the product of the second numerical value and the preset numerical value as a third numerical value.

Here, the above executing body may determine the product of the degrees of the group of vertices as the second numerical value, and determine the product of the second numerical value and the preset numerical value as the third numerical value. The above executing body may determine the product of the degree of one vertex in the group of vertices and the degree of the other vertex as the second numerical value. The degree of the vertex represents the number of other vertices connected to the vertex. The above preset numerical value is generally related to the number of edges in the above graph network. For example, the above numerical value may be twice the number of the edges in the above graph network. As an example, if the group of vertices are a vertex A and a vertex B, the degree of the vertex A is 5, the degree of the vertex B is 3, and the above graph network contains 30 edges, the above second numerical value may be 15, and the above third numerical value may be 0.25.

Step 4034, determining the difference value between the first numerical value and the third numerical value as the fourth numerical value, and determining the product of the similarity between the items represented by the group of vertices, the fourth numerical value and the result value as the target value corresponding to the group of vertices.

Here, the above executing body may determine the difference value between the first numerical value and the third numerical value as the fourth numerical value, and determine the product of the similarity between the items represented by the group of vertices, the fourth numerical value, and the result value as the target value corresponding to the group of vertices.

Step 4035, summing the target values corresponding to the groups of vertices to obtain a sum value, determining the product of the sum value and the preset numerical value as the score of the initial clustering result, and adding the initial clustering result to the preset initial clustering result set.

Here, the above executing body may sum the target values corresponding to the groups of vertices to obtain a sum value, and ascertain the product of the sum value and the preset numerical value as the score of the initial clustering result. Here, the above preset numerical value is generally related to the number of the edges in the above graph network. For example, the above preset numerical value may be the reciprocal of the product of the number of the edges in the above graph network and 2. Then, the initial clustering result may be added to the preset initial clustering result set.

Here, the above executing body may ascertain the score of the above initial clustering result according to the following formula (8):

$$M = \frac{1}{2L} \sum_{i,j=1}^{N} \left( A_{i,j} - \frac{k_i k_j}{2L} \right) \delta(c_i, c_j) W(i,j) \quad (8).$$

Here, $M$ is modularity, which is a criterion used to measure the quality of the division for a graph community, and the better the division quality is, the larger the value of $M$ is; $L$ is the number of edges contained in the above graph network; the values of $i$ and $j$ range from 1 to $N$, the value of $N$ is greater than or equal to 1, and $N$ is the number of vertices contained in the above graph network; and $A_{i,j}$ is a value corresponding to an $i$-th vertex and a $j$-th vertex in an adjacency matrix. Here, the numerical value in the adjacency matrix is ascertained based on the numerical value at a corresponding position in the item similarity matrix and the preset similarity threshold. If the similarity between the item represented by the $i$-th vertex and the item represented by the $j$-th vertex is greater than the above similarity threshold, the corresponding numerical value in the adjacency matrix is 1. If the similarity between the item represented by the $i$-th vertex and the item represented by the $j$-th vertex is less than or equal to the above similarity threshold, the corresponding numerical value in the adjacency matrix is 0. Moreover, $k_i$ represents a degree of the vertex $i$ (here, the degree of the vertex represents the number of other vertices connected to the vertex); $k_j$ represents a degree of the vertex $j$ ; $c_i$ represents a cluster of the $i$-th vertex; $c_j$ represents a cluster of the $j$-th vertex; $\delta(c_i, c_j)$ is a Kronecker-delta function, $\delta(c_i, c_j)$ is 1 if the $i$-th vertex and the $j$-th vertex belong to the same cluster, and $\delta(c_i, c_j)$ is 0 if the $i$-th vertex and the $j$-th vertex do not belong to the same cluster. Moreover, $W(i,j)$ is the similarity between the item represented by the $i$-th vertex and the item represented by the $j$-th vertex.

Step 4036, ascertaining whether there exists another clustering result for the vertices in the graph network.

Here, the above executing body may ascertain whether there exists another clustering result for the vertices in the above graph network. If it is ascertained that there exists no other clustering result for the vertices in the above graph network, the above executing body may perform step 4037.

Step 4037, selecting, based on the each ascertained score, the initial clustering result from the initial clustering result set as the clustering result, if it is ascertained that there exists no other clustering result for the vertices in the graph network.

Here, if it is ascertained in step 4036 that there exists no other clustering result for the vertices in the above graph network, the above executing body may select, based on the each ascertained score, the initial clustering result from the above initial clustering result set as the clustering result. Particularly, an initial clustering result corresponding to a highest score may be selected from the above initial clustering result set as a final clustering result. An initial clustering result with a score higher than a preset score threshold may alternatively be selected from the above initial clustering result set as a final clustering result.

In some alternative implementations of this embodiment, if it is ascertained in step 4036 that there exists another clustering result for the vertices in the above graph network, the above executing body may use the another clustering result as an initial clustering result, to continue to perform the above determination steps (step 4031-step 4037).

According to the method provided in the above embodiment of the present disclosure, the similarities between the items are ascertained using the behavior times of the behaviors generated on the information of the items. This approach of ascertaining the similarity takes the connection between the shopping habit of a user and a commodity into consideration, thereby improving the pertinence of the pushed item information.

According to the method provided in the above embodiment of the present disclosure, the items represented by the vertices in the graph network are clustered based on the graph community detection algorithm and the similarities between the items. This clustering approach takes the similarities between the items into consideration, and thus, a more accurate clustering result can be obtained, thereby further improving the accuracy of pushing the item information.

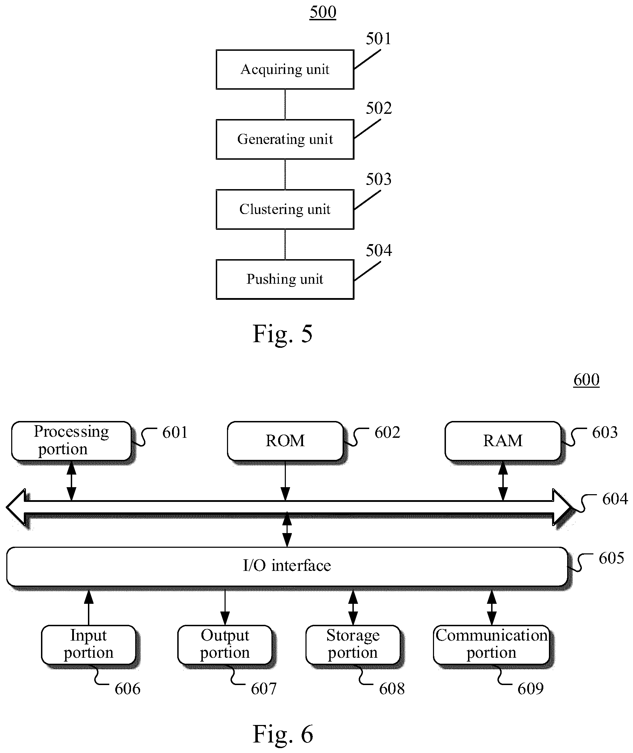

Further referring to Fig. 5, as an implementation of the method shown in the above drawings, an embodiment of the present disclosure provides an apparatus for pushing information. The embodiment of the apparatus corresponds to the embodiment of the method shown in Fig. 2. The apparatus may be applied in various electronic devices.

As shown in Fig. 5, the apparatus 500 for pushing information in this embodiment includes: an obtaining unit 501, a generating unit 502, a clustering unit 503 and a pushing unit 504. Here, the obtaining unit 501 is configured to obtain behavior information of at least one target user, and extract target information from the behavior information, where the target information comprises an item identifier of an item targeted by a behavior. The generating unit 502 is configured to ascertain similarities between items indicated by extracted item identifiers, generate an item similarity matrix by using the similarities between the items, and construct a graph network by using the item similarity matrix, where a vertex in the graph network is used to represent an item, and an edge in the graph network is used to represent a similarity between items. The clustering unit 503 is configured to cluster, by using a graph community detection algorithm, items represented by vertices in the graph network to obtain a clustering result. The pushing unit 504 is configured to push item information to a user terminal of the at least one target user based on the clustering result.

In this embodiment, for detailed processes of the obtaining unit 501, the generating unit 502, the clustering unit 503 and the pushing unit 504 in the apparatus 500 for pushing information, reference may be made to step 201, step 202, step 203 and step 204 in the corresponding embodiment of Fig. 2.

In some alternative implementations of this embodiment, the above target information may further include a behavior time of a behavior generated on an item. Here, one behavior time generally corresponds to one item identifier. The above generating unit 502 may ascertain the similarity between the items indicated by the extracted item identifiers through the following approach. For each target user in the at least one target user, the above generating unit 502 may sort, according to the sequential order of the behavior times of the target user, corresponding item identifiers to obtain an item identifier sequence. Then, the above generating unit 502 may ascertain a similarity between the items indicated by adjacent item identifiers in the above item identifier sequence as a first similarity. Particularly, for each group of items in groups of items, the above generating unit 502 may ascertain a time difference between behavior times of behaviors generated on the group of items. Then, the above generating unit 502 may round down a ratio of an absolute value of the time difference to a preset second numerical value to obtain an integer, and input the obtained integer into a preset Gaussian kernel function to obtain a similarity between the group of items as the first similarity. Then, the above generating unit 502 may sum first similarities between repeated two items to obtain the similarity between the two items.

In some alternative implementations of this embodiment, the above generating unit 502 may ascertain the similarity between the items indicated by the adjacent item identifiers in the item identifier sequence as the first similarity through the following approach. For each group of items in the groups of items, the above generating unit 502 may ascertain the time difference between the behavior times of the behaviors generated on the group of items. Then, the above generating unit 502 may round down a ratio of an absolute value of the ascertained time difference to a preset first numerical value to obtain an integer, and determine the obtained integer as a normalized time difference. Here, the preset first numerical value may be obtained through a statistical analysis.

Here, the above generating unit 502 may ascertain the normalized time difference according to the following formula (3):

$$\tau = \left\lfloor \frac{|t_j - t_i|}{\tau_0} \right\rfloor (3).$$

Here, $\tau$ is a normalized time difference; $t_j$ is the behavior time of a behavior generated on a j-th item; $t_i$ is the behavior time of a behavior generated on an i-th item; $\tau_0$ is a constant, which represents a normalization factor for $|t_j - t_i|$ and of which the value may be obtained through a statistical analysis according to an actual situation. Here, $\tau_0$ may be 15, indicating that 15 minutes are taken as a time reference. For example, when the time difference between the two items targeted by the behaviors of the user is within 15 minutes, the normalized time difference obtained from the formula (3) is 0. When the time difference between the two items targeted by the behaviors of the user is greater than 15 minutes but less than 30 minutes, the normalized time difference obtained from the formula (3) is 1.

Then, the above generating unit 502 may input the above normalized time difference into the preset Gaussian kernel function to obtain the similarity between the group of items as the first similarity.

Here, the above generating unit 502 may ascertain the similarity between one group of items according to the following formula (4):

$$sim^{(k,d)} \left( sku_{t_i}^m, sku_{t_j}^n \right) = exp \left( -\frac{\tau^2}{2\sigma^2} \right) (4).$$

Here, $sim^{(k,d)}$ ( $sku_{t_i}^m, sku_{t_j}^n$ ) represents a similarity between an item m targeted by a behavior generated at a moment $t_i$ by a k-th user in a certain day (represented by d here) and an item $n$ targeted by a behavior generated at a moment $t_j$ by the k-th user in the certain day. Here, $t_i$ and $t_j$ are respectively two different time points (a minute may be used as a basic time unit here) at which the same user (the k-th user here) generates behaviors on different commodities in the same day (day $d$ here), and $\tau$ represents the normalized time difference between $t_i$ and $t_j$. As $\tau$ increases, the values of the Gaussian kernel function decreases monotonically. Here, $\sigma$ refers to a bandwidth in the Gaussian kernel function, which is used to control a radial range of effect. The larger $\sigma$ is, the larger the local influence range of the Gaussian kernel function is.

In some alternative implementations of this embodiment, the above clustering unit 503 may cluster, through the following approach, the items represented by the vertices in the above graph network by using the graph community detection algorithm to obtain the clustering result. The above clustering unit 503 may cluster the items represented by the vertices in the graph network based on the graph community detection algorithm and the above similarities between the items to obtain the clustering result. Particularly, the above clustering unit 503 may cluster the items represented by the vertices in the above graph network according to the following formula (2):

$$M = \frac{1}{2L} \sum_{i,j=1}^{N} \left( A_{i,j} - \frac{k_i k_j}{2L} \right) \delta \left( c_i, c_j \right) C(i,j) \ (2).$$

Here, *M* is modularity, which is a criterion used to measure the quality of the division for a graph community, and the better the division quality is, the larger the value of *M* is; *L* is the number of edges contained in the above graph network; the values of *i* and *j* range from 1 to *N*, the value of *N* is greater than or equal to 1, and *N* is the number of vertices contained in the above graph network; and $A_{i,j}$ is a value corresponding to an *i*-th vertex and a *j*-th vertex in an adjacency matrix. Here, a numerical value in the adjacency matrix is ascertained based on the numerical value at a corresponding position in the item similarity matrix and a preset similarity threshold. If the similarity between the item represented by the *i*-th vertex and the item represented by the *j*-th vertex is greater than the above similarity threshold, the corresponding numerical value in the adjacency matrix is 1. If the similarity between the item represented by the *i*-th vertex and the item represented by the *j*-th vertex is less than or equal to the above similarity threshold, the corresponding numerical value in the adjacency matrix is 0. Moreover, $k_i$ represents a degree of the vertex *i* (here, the degree of the vertex represents the number of other vertices connected to the vertex); $k_j$ represents a degree of the vertex *j*; $c_i$ represents a cluster of the *i*-th vertex; $c_j$ represents a cluster of the *j*-th vertex; $\delta(c_i, c_j)$ is a Kronecker-delta function, $\delta(c_i, c_j)$ is 1 if the *i*-th vertex and the *j*-th vertex belong to the same cluster, and $\delta(c_i, c_j)$ is 0 if the *i*-th vertex and the *j*-th vertex do not belong to the same cluster. Moreover, *C(i,j)* is ascertained by the similarity *W(i,j)* between the item represented by the *i*-th vertex and the item represented by the *j*-th vertex and the preset similarity threshold. If *W(i,j)* is greater than the above similarity threshold, *C(i, j)*=1. If *W(i,j)* is less than or equal to the above similarity threshold, *C(i,j)=O*.

In some alternative implementations of this embodiment, the above clustering unit 503 may cluster, through the following approach, the items represented by the vertices in the graph network based on the graph community detection algorithm and the similarities between the items to obtain the clustering result. First, the above clustering unit 503 may ascertain degrees of the vertices in the graph network. Here, a degree of a vertex generally represents the number of other vertices connected to the vertex. Then, the above clustering unit 503 may ascertain an item adjacency matrix by using the item similarity matrix. A numerical value in the above item adjacency matrix is generally ascertained based on a numerical value at a corresponding position in the above item similarity matrix and a preset similarity threshold. Particularly, if a certain numerical value in the above item similarity matrix is less than the above similarity threshold, the numerical value at the position in the above item adjacency matrix corresponding to this certain numerical value may be set to 0. Next, the above clustering unit 503 may perform an initial clustering on the vertices in above the graph network to obtain an initial clustering result, and perform, based on the initial clustering result, following determination steps: for each group of vertices in groups of vertices that are respectively composed of two vertices in the graph network, generating a result value used to represent whether the each group of vertices are in a same cluster by using the initial clustering result; acquiring, from the item adjacency matrix, a numerical value corresponding to the each group of vertices as a first numerical value; determining a product of degrees of the each group of vertices as a second numerical value, and determining a product of the second numerical value and a preset numerical value as a third numerical value; determining a difference value between the first numerical value and the third numerical value as a fourth numerical value, and determining a product of a similarity between items represented by the each group of vertices, the fourth numerical value, and the result value as a target value corresponding to the each group of vertices; summing target values corresponding to the groups of vertices to obtain a sum value, determining a product of the sum value and the preset numerical value as a score of the initial clustering result, and adding the initial clustering result to a preset initial clustering result set; ascertaining whether there exists another clustering result for the vertices in the graph network; and selecting, based on each ascertained score, an initial clustering result from the initial clustering result set as a clustering result, if there exists no other clustering result, wherein the preset numerical value is related to a number of edges in the graph network.

In some alternative implementations of this embodiment, if it is ascertained that there exists another clustering result for the vertices in the above graph network, the above clustering unit 503 may use the another clustering result as an initial clustering result, to continue to perform the above determination steps.

Referring to Fig. 6, Fig. 6 is a schematic structural diagram of an electronic device (e.g., the server shown in Fig. 1) 600 adapted to implement embodiments of the present disclosure. The server shown in Fig. 6 is merely an example, and should not bring any limitation to the functions and the scope of usage of embodiments of the present disclosure.

As shown in Fig. 6, the computer system 600 includes a processing portion (e.g, a central processing unit, a graphics processing unit, etc.) 601, which may execute various appropriate actions and processes in accordance with a program stored in a read-only memory (ROM) 602 or a program loaded into a random access memory (RAM) 603 from a storage portion 608. The RAM 603 also stores various programs and data required by operations of the system 600. The processing porition 601, the ROM 602 and the RAM 603 are connected to each other through a bus 604. An input/output (I/O) interface 605 is also connected to the bus 604.

The following components are connected to the I/O interface 605: an input portion 606 including a ouch screen, a touch panel, a keyboard, a mouse, a camera, a microphone, an accelerometer, a gyroscope etc.; an output portion 607 comprising a liquid crystal display device (LCD), a speaker, a vibrator etc.; a storage portion 608 including magnetic tape, a hard disk and the like; and a communication portion 609. The communication portion 609 may allow the electronic device 600 to perform wireless or wired communication with other devices to exchange data. Although Fig. 6 shows the electronic device 600 having various portions, it should be understood that it is not required to implement or have all the portions shown. More or fewer portions may alternatively be implemented or provided. Each block shown in Fig. 6 may represent one portion or may represent a plurality of portions as needed.

In particular, according to embodiments of the present disclosure, the process described above with reference to the flow chart may be implemented in a computer software program. For example, an embodiment of the present disclosure includes a computer program product, which comprises a computer program that is hosted in a machine-readable medium. The computer program comprises program codes for executing the method as illustrated in the flow chart. In such an embodiment, the computer program may be downloaded and installed from a network via the communication portion 609, or may be installed from the storgae portion 608, or may be installed from the ROM 602. The computer program, when executed by the processing unit 601, implements the above mentioned functionalities as defined by the methods of the present disclosure. It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In some embodiments of the present disclosure, the computer readable storage medium may be any tangible medium containing or storing programs which can be used by a command execution system, apparatus or element or incorporated thereto. In some embodiments of the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

The above computer readable medium may be the computer readable medium included in the above electronic device, or a stand-alone computer readable medium not assembled into the electronic device. The above computer readable medium carries one or more programs. The one or more programs, when executed by the electronic device, cause the electronic device to: obtain behavior information of at least one target user, and extract target information from the behavior information, the target information comprising an item identifier of an item targeted by a behavior; ascertain similarities between items indicated by extracted item identifiers, generate an item similarity matrix by using the similarities between the items, and construct a graph network by using the item similarity matrix, wherein a vertex in the graph network is used to represent an item, and an edge in the graph network is used to represent a similarity between items; cluster items represented by vertices in the graph network by using a graph community detection algorithm to obtain a clustering result; and push item information to a user terminal of the at least one target user based on the clustering result.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The described units involved in embodiments of the present disclosure may be implemented by means of software or hardware. The described unit can alternatively be provided in a processor, which, for example, can be described as: a processor including an acquiring unit, a generating unit, a clustering unit and a pushing unit. Here, the names of these units do not in some cases constitute a limitation to such units themselves. For example, the pushing unit may alternatively be described as "a unit for pushing item information to a user terminal of the at least one target user based on the clustering result."

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in embodiments of the present disclosure are examples.

## Claims

1. A method for pushing information, comprising:

    obtaining behavior information of at least one target user, and extracting target information from the behavior information, wherein the target information comprises an item identifier of an item targeted by a behavior;
    ascertaining similarities between items indicated by extracted item identifiers, generating an item similarity matrix by using the similarities between the items, and constructing a graph network by using the item similarity matrix, wherein a vertex in the graph network is used to represent an item, and an edge in the graph network is used to represent a similarity between items;
    clustering, by using a graph community detection algorithm, items represented by vertices in the graph network to obtain a clustering result; and
    pushing item information to a user terminal of the at least one target user based on the clustering result.

2. The method according to claim 1, wherein the target information further comprises a behavior time of the behavior generated on the item, the behavior time and the item identifier are corresponding to each other, and

    the ascertaining the similarities between the items indicated by the extracted item identifiers comprises:

    for each target user in the at least one target user, sorting corresponding item identifiers according to a sequential order of behavior times of the target user to obtain an item identifier sequence, and ascertaining a similarity between items indicated by adjacent item identifiers in the item identifier sequence as a first similarity; and
    summing first similarities between repeated two items to obtain a similarity between the two items.

3. The method according to claim 2, wherein the ascertaining the similarity between the items indicated by adjacent item identifiers in the item identifier sequence as the first similarity comprises:
   for each group of items in groups of items, ascertaining a time difference between behavior times of behaviors generated on the each group of items, rounding down a ratio of an absolute value of the time difference to a preset first numerical value to obtain an integer, determining the obtained integer as a normalized time difference, and inputting the normalized time difference into a preset Gaussian kernel function, to obtain a similarity between the each group of items as the first similarity, wherein the each group of items is composed of two items indicated by adjacent item identifiers in the item identifier sequence corresponding to the target user.

4. The method according to any one of claims 1-3, wherein the clustering, by using the graph community detection algorithm, the items represented by the vertices in the graph network to obtain the clustering result comprises:
   clustering, based on the graph community detection algorithm and the similarities between items, the items represented by the vertices in the graph network to obtain the clustering result.

5. The method according to claim 4, wherein the clustering, based on the graph community detection algorithm and the similarities between items, the items represented by the vertices in the graph network to obtain the clustering result comprises:

ascertaining degrees of the vertices in the graph network;

ascertaining an item adjacency matrix by using the item similarity matrix, wherein a numerical value in the item adjacency matrix is ascertained based on a numerical value at a corresponding position in the item similarity matrix and a preset similarity threshold; and

performing an initial clustering on the vertices in the graph network to obtain an initial clustering result, and performing, based on the initial clustering result, following determination steps: for each group of vertices in groups of vertices that are respectively composed of two vertices in the graph network, generating a result value used to represent whether the each group of vertices are in a same cluster by using the initial clustering result; acquiring, from the item adjacency matrix, a numerical value corresponding to the each group of vertices as a first numerical value; determining a product of degrees of the each group of vertices as a second numerical value, and determining a product of the second numerical value and a preset numerical value as a third numerical value; determining a difference value between the first numerical value and the third numerical value as a fourth numerical value, and determining a product of a similarity between items represented by the each group of vertices, the fourth numerical value, and the result value as a target value corresponding to the each group of vertices; summing target values corresponding to the groups of vertices to obtain a sum value, determining a product of the sum value and the preset numerical value as a score of the initial clustering result, and adding the initial clustering result to a preset initial clustering result set; ascertaining whether there exists another clustering result for the vertices in the graph network; and selecting, based on each ascertained score, an initial clustering result from the initial clustering result set as a clustering result, if there exists no other clustering result, wherein the preset numerical value is related to a number of edges in the graph network.

6. The method according to claim 5, further comprising:
using, if there exists another clustering result, the another clustering result as an initial clustering result, to continue to perform the determination steps.

7. An apparatus for pushing information, comprising:

an obtaining unit, configured to obtain behavior information of at least one target user, and extract target information from the behavior information, wherein the target information comprises an item identifier of an item targeted by a behavior;

a generating unit, configured to ascertain similarities between items indicated by extracted item identifiers, generate an item similarity matrix by using the similarities between the items, and construct a graph network by using the item similarity matrix, wherein a vertex in the graph network is used to represent an item, and an edge in the graph network is used to represent a similarity between items;

a clustering unit, configured to cluster, by using a graph community detection algorithm, items represented by vertices in the graph network to obtain a clustering result; and

a pushing unit, configured to push item information to a user terminal of the at least one target user based on the clustering result.

8. The apparatus according to claim 7, wherein the target information further comprises a behavior time of the behavior generated on the item, the behavior time and the item identifier are corresponding to each other, and the generating unit is further configured to:

for each target user in the at least one target user, sort corresponding item identifiers according to a sequential order of behavior times of the target user to obtain an item identifier sequence, and ascertain a similarity between items indicated by adjacent item identifiers in the item identifier sequence as a first similarity; and
sum first similarities between repeated two items to obtain a similarity between the two items.

9. The apparatus according to claim 8, wherein ascertaining the similarity between the items indicated by the adjacent item identifiers in the item identifier sequence as the first similarity comprises:
for each group of items in groups of items, ascertaining a time difference between behavior times of behaviors generated on the each group of items, rounding down a ratio of an absolute value of the time difference to a preset first numerical value to obtain an integer, determining the obtained integer as a normalized time difference, and inputting the normalized time difference into a preset Gaussian kernel function, to obtain a similarity between the each group of items as the first similarity, wherein the each group of items is composed of two items indicated by adjacent item identifiers in the item identifier sequence corresponding to the target user.

10. The apparatus according to any one of claims 7-9, wherein the clustering unit is further configured to cluster, through a following approach, the items represented by the vertices in the graph network by using the graph community detection algorithm to obtain the clustering result:
clustering, based on the graph community detection algorithm and the similarities between items, the items represented by the vertices in the graph network to obtain the clustering result.

11. The apparatus according to claim 10, wherein the clustering, based on the graph community detection algorithm and the similarities between items, the items represented by the vertices in the graph network to obtain the clustering result comprises:

ascertaining degrees of the vertices in the graph network;
ascertaining an item adjacency matrix by using the item similarity matrix, wherein a numerical value in the item adjacency matrix is ascertained based on a numerical value at a corresponding position in the item similarity matrix and a preset similarity threshold; and
performing an initial clustering on the vertices in the graph network to obtain an initial clustering result, and performing, based on the initial clustering result, following determination steps: for each group of vertices in groups of vertices that are respectively composed of two vertices in the graph network, generating a result value used to represent whether the each group of vertices are in a same cluster by using the initial clustering result; acquiring, from the item adjacency matrix, a numerical value corresponding to the each group of vertices as a first numerical value; determining a product of degrees of the each group of vertices as a second numerical value, and determining a product of the second numerical value and a preset numerical value as a third numerical value; determining a difference value between the first numerical value and the third numerical value as a fourth numerical value, and determining a product of a similarity between items represented by the each group of vertices, the fourth numerical value, and the result value as a target value corresponding to the each group of vertices; summing target values corresponding to the groups of vertices to obtain a sum value, determining a product of the sum value and the preset numerical value as a score of the initial clustering result, and adding the initial clustering result to a preset initial clustering result set; ascertaining whether there exists another clustering result for the vertices in the graph network; and selecting, based on each ascertained score, an initial clustering result from the initial clustering result set as a clustering result, if there exists no other clustering result, wherein the preset numerical value is related to a number of edges in the graph network.

12. The apparatus according to claim 11, wherein if there exists another clustering result for the vertices in the graph network, the another clustering result is used as an initial clustering result, to continue to perform the determination steps.

13. An electronic device, comprising:

one or more processors; and
a storage apparatus, configured to store one or more programs,
wherein the one or more programs, when executed by the one or more processors, cause the one or more processors to implement the method according to any one of claims 1-6.

14. A computer readable medium, storing a computer program, wherein the program, when executed by a processor, implements the method according to any one of claims 1-6.

1011

1012

1013

100

102

103

Fig. 1

<u>200</u>

201

Obtain behavior information of at least one target user, and extract target information from the behavior information

202

Ascertain similarities between items indicated by extracted item identifiers, generate an item similarity matrix using the similarities between the items, and construct a graph network using the item similarity matrix

203

Cluster items represented by vertices in the graph network using a graph community detection algorithm, to obtain a clustering result

204

Push item information to a user terminal of the at least one target user based on the clustering result

Fig. 2

300

| 301 |
|---|
| Sort, for each target user in at least one target user, corresponding item identifiers according to a sequential order of behavior times of the target user, to obtain an item identifier sequence |

| 302 |
|---|
| Ascertain, for each group of items in groups of items, a time difference between behavior times of behaviors generated on the group of items |

| 303 |
|---|
| Round down a ratio of an absolute value of the time difference to a preset first numerical value, determine an obtained integer as a normalized time difference, and input the normalized time difference into a preset Gaussian kernel function, to obtain a similarity between the group of items as a first similarity |

| 304 |
|---|
| Sum first similarities between repeated two items, to obtain a similarity between the two items |

Fig. 3

400

401

Ascertain degrees of vertices in a graph network

402

Ascertain an item adjacency matrix by using an item similarity matrix

403

Perform initial clustering on the vertices in the graph network to obtain an initial clustering result, and perform, based on the initial clustering result, following determination steps:

4031

Generate, for each group of vertices in groups of vertices that are respectively composed of two vertices in the graph network, a result value used to represent whether the group of vertices are in same one cluster using the initial clustering result

4032

Acquire a numerical value corresponding to the group of vertices from the item adjacency matrix as a first numerical value

4033

Determine a product of degrees of the group of vertices as a second numerical value, and determine a product of the second numerical value and a preset numerical value as a third numerical value

4034

Determine a difference value between the first numerical value and the third numerical value as a fourth numerical value, and determine a product of a similarity between items represented by the group of vertices, the fourth numerical value and the result value as a target value corresponding to the group of vertices

4035

Sum target values corresponding to the groups of vertices, determine a product of an obtained sum value and the preset numerical value as a score of the initial clustering result, and add the initial clustering result to a preset initial clustering result set

4036

Ascertain whether there exists another clustering result for the vertices in the graph network

No

4037

Select, based on each ascertained score, an initial clustering result from the initial clustering result set as a clustering result

Fig. 4

500

Acquiring unit — 501

Generating unit — 502

Clustering unit — 503

Pushing unit — 504

Fig. 5

600

Processing portion — 601    ROM — 602    RAM — 603

— 604

I/O interface — 605

Input portion — 606    Output portion — 607    Storage portion — 608    Communication portion — 609

Fig. 6

# EP 4 134 898 A1

| INTERNATIONAL SEARCH REPORT | International application No.<br>**PCT/CN2021/084266** |
|---|---|

| | |
|---|---|
| **A.   CLASSIFICATION OF SUBJECT MATTER**<br>G06Q 30/06(2012.01)i<br><br>According to International Patent Classification (IPC) or to both national classification and IPC | |

| **B.   FIELDS SEARCHED** |
|---|
| Minimum documentation searched (classification system followed by classification symbols)<br>G06Q, G06F |
| Documentation searched other than minimum documentation to the extent that such documents are included in the fields searched |
| Electronic data base consulted during the international search (name of data base and, where practicable, search terms used)<br>WPI, EPODOC, CNPAT, CNKI, IEEE: 推送, 推荐, 用户, 行为, 物品, 商品, 货品, 货物, 标识, 相似度, 矩阵, 图, 网络, 边, 顶点, 图团体检测, 时间, 排序, 聚类, 时间差; push+, recommend+, user, behavior, item, commodity, good, identification, similarity, matrix, graph, network, edge, vertex, graph group detect+, time, order+, cluster+, time difference |

| **C.   DOCUMENTS CONSIDERED TO BE RELEVANT** | | |
|---|---|---|
| Category* | Citation of document, with indication, where appropriate, of the relevant passages | Relevant to claim No. |
| A | CN 105913296 A (BEIJING INSTITUTE OF TECHNOLOGY) 31 August 2016 (2016-08-31)<br>claims 1-3, description paragraphs [0020]-[0058] | 1-14 |
| A | CN 107424273 A (HANGZHOU UNIVERSAL UBIQUITOUS TECHNOLOGY CO., LTD.)<br>01 December 2017 (2017-12-01)<br>entire document | 1-14 |
| A | CN 110956511 A (SHENZHEN QIANHAI WEBANK CO., LTD.) 03 April 2020<br>(2020-04-03)<br>entire document | 1-14 |
| A | CN 110674407 A (HANGZHOU DIANZI UNIVERSITY) 10 January 2020 (2020-01-10)<br>entire document | 1-14 |
| A | US 2017270590 A1 (PALO ALTO RESEARCH CENTER INCORPORATED) 21 September<br>2017 (2017-09-21)<br>entire document | 1-14 |
| A | US 9286391 B1 (AMAZON TECHNOLOGIES, INC.) 15 March 2016 (2016-03-15)<br>entire document | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>**17 June 2021** | Date of mailing of the international search report<br>**24 June 2021** |
|---|---|
| Name and mailing address of the ISA/CN<br><br>**China National Intellectual Property Administration (ISA/CN)**<br>**No. 6, Xitucheng Road, Jimenqiao, Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/084266**

| Patent document cited in search report | | | Publication date (day/month/year) | Patent family member(s) | | | Publication date (day/month/year) |
|---|---|---|---|---|---|---|---|
| CN | 105913296 | A | 31 August 2016 | CN | 105913296 | B | 03 January 2020 |
| CN | 107424273 | A | 01 December 2017 | None | | | |
| CN | 110956511 | A | 03 April 2020 | None | | | |
| CN | 110674407 | A | 10 January 2020 | None | | | |
| US | 2017270590 | A1 | 21 September 2017 | None | | | |
| US | 9286391 | B1 | 15 March 2016 | US | 10095771 | B1 | 09 October 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010281176